# EUROPEAN PATENT APPLICATION

(11) **EP 3 587 278 A1**
(43) Date of publication of application: **01.01.2020**
(21) Application number: 18180466.7
(22) Date of filing: 28.06.2018
(51) Int. Cl.: B64F 1/32, B64F 1/36, B65G 21/06, B65G 41/00, B65G 21/00

(54) **A METHOD AND SYSTEM FOR HANDLING OF LUGGAGE OR PARCEL ITEMS**

(71) Applicant: BBHS A/S, 2640 Hedehusene (DK)
(72) Inventor: SVENNINGSEN, Ulrik, 2500 Valby (DK); GRIZ, Krisztián, 2630 Taastrup (DK)
(74) Representative: Inspicos P/S

(57) **Abstract**

A method of building and operating a conveyor system and a conveyor system is disclosed. The method comprises providing a plurality of conveyor modules, wherein each conveyor module comprises at least at least one shelf and electrical drive system for driving the conveyor means of the shelf. Each conveyor module is comprised in a shipping container and the conveyor system is operated while the conveyor modules remain inside the containers in the method and system. Also disclosed is shipping container for use in the conveyor system or method. The shipping container comprises at least one conveyor module, the conveyor module comprising at least one conveyor module shelf and electrical drive system for driving the conveyor means of the shelf. The at least one conveyor module shelf and the at least one electrical drive system are comprised in the container in a pre-assembled operational state.

## Description

### Technical field

The present invention relates to a method and system for handling of luggage or parcel items, for example at airports. One aspect of the invention is particularly concerned with a method of building and operating a conveyor system comprising a plurality of conveyor modules, each conveyor module being comprised in a shipping container.

### Background of the invention

Various systems are known for transporting, sorting and storing various items and goods, including luggage and parcel items. Such systems are usually tailored to meet specific requirements set by the nature, size and weight of the items, as well as requirements regarding sorting, transport distances and speed of item transportation.

One specific field of interest of the present application is the field of transportation and storage of luggage or parcel items in airports. In most airports, checked-in luggage is usually conveyed from a plurality of check-in counters to a central luggage conveying and/or sorting apparatus, referred to herein also as a principal conveyor, at which each luggage item is sorted according to its destination. Such conveying and/or sorting apparatus normally comprises a plurality of discharge units, in each of which luggage items destined for a particular aircraft are accumulated. The luggage items are then manually loaded onto carts or trolleys, by means of which the items are transported to the aircraft. The carts or trolleys may be self-propelled, or they may be attachable to a propelling unit (or tractor), which may be arranged to pull a plurality of trolleys or carts coupled together to form a train. Likewise parcels being sorted are typically discharged from a sorting conveyor into a plurality of collecting stations, each of which is designated for a particular destination. From the collecting stations, the parcels are transported in trollies, carts, containers, cages or bins to an aircraft.

In general, systems for transportation and storage of luggage or parcel items have a relatively large areal footprint, which in turn requires relatively large buildings for housing the systems. Also, such systems are generally relatively cumbersome to ship and install.

### Summary of the invention

On the above background it is an object of embodiments of the invention to provide a method and system which eases the process of installing a system for automated handling of luggage and parcel items, while reducing the need for manual labour, possibly in both the system installation and luggage handling process. It is a still further object of embodiments of the invention to provide a system, installation and operation of which is relatively easy, and which can be integrated with a variety of different sorting systems. It is a still further object of embodiments of the invention to provide a system, which enhances capacity utilization per square meter of the conveyor and sorting systems, as well as of the premises housing such conveyor and sorting systems. It is still a further object of embodiments of the invention to provide a system which may be conveniently configured to be self-contained or integrated with an existing baggage or parcel handling system. It is still a further object of embodiments of the invention to provide a system for handling of luggage or parcel items, which allow for convenient disassembly at an operational site, shipping and re-erection at a different operational site.

In a first aspect, embodiments of the invention provide a method of building and operating a conveyor system, comprising the steps of:
- providing a plurality of conveyor modules, each conveyor module at least comprising:
   ∘ at least one shelf comprising conveyor means for conveying luggage or parcel items; and
   ∘ at least one electrical drive system arranged to drive the conveyor means, wherein each conveyor module is comprised in a shipping container;
- arranging the plurality of shipping containers in the vicinity of each other at an operation site;
- interconnecting the plurality of conveyor modules comprised in the respective shipping containers while at least part of the conveyor modules remain inside the containers; and
- operating the conveyor system while the conveyor modules remain inside the containers.

In a second aspect, embodiments of the invention provide a modular conveyor system for luggage or parcel items, comprising:
- a plurality of shipping containers;
- at least one conveyor module of the conveyor system within each container, each conveyor module comprising:
   ∘ at least one conveyor module shelf comprising conveyor means for conveying the luggage or parcel items;
   ∘ at least one electrical drive system for driving the conveyor means,
wherein the at least one conveyor module shelf and the at least one electrical drive system are comprised in the respective containers in a pre-assembled operational state.

In a third aspect, embodiments of the invention provide a shipping container for use in a modular conveyor system for luggage or parcel items according to embodiments of the second aspect, the shipping container comprising:
- at least one conveyor module, the conveyor module comprising:
   ∘ at least one conveyor module shelf comprising conveyor means for conveying the luggage or parcel items;
   ∘ at least one electrical drive system for driving the conveyor means,
wherein the at least one conveyor module shelf and the at least one electrical drive system are comprised in the container in a pre-assembled operational state.

In present context, the term 'operational state' is to be understood as a state in which all there is needed for making the electrical drive system drive the conveyor means of the at least one conveyor module shelf is to connect the electrical drive system to a power supply.

Thanks to the provision of the at least one conveyor module and drive system being comprised in a container in a pre-assembled operational state, transportation, installation and operation of a conveyor system for luggage or parcel items may be improved. Moreover, the pre-assembled operational state of the conveyor module and electrical drive system in the container allows for bringing the conveyor module into operation solely be opening the container and connecting the electrical drive system to a power supply. Such ease of instalment allows for rapid installation, possibly by personnel with a relatively general level of skill. Besides easing the transportation and instalment process, the container allows the conveyor module comprised therein to be somewhat protected from the elements if installed at an outdoor location. Accordingly, the conveyor module may be installed and operated at an outdoor location without the need for a building to house the conveyor module. Further, by having the conveyor module and electrical drive system being comprised in a container in a pre-assembled operational state, a self-contained (complete) or supplementary conveyor system may conveniently be provided by providing and inter-connecting a plurality of such containers and possibly providing a connection, e.g. by cart or conveyor means, to an existing conveyor system at the airport. This allows for a relatively simple and fast way of expanding an existing conveyor system for luggage or parcel, or for providing a complete and self-contained luggage or parcel conveyor system. Hence embodiments of the invention may be particularly useful for providing a temporary conveyor system for luggage or parcel items during construction work at an airport.

In embodiments, the container may be an intermodal container for convenient transportation of the conveyor module and electrical drive system. The intermodal container may be an ISO container, such as, e.g., a 20 or 40 foot container, possibly a high cube container. The walls and/or sides and/or hatches may be modified for improved connectivity of the intermodal container and for ease of instalment and operation of a collection of conveyor modules comprised in containers.

In embodiments, the operation site is an outdoor location. This allows for particularly convenient instalment of the conveyor module comprised in the container as the container in this embodiment need not be brought to an indoor location. Further, the conveyor module comprised in the container installed at an outdoor location may be installed in the vicinity of aircrafts from/to which the luggage or parcel items are to be provided. Also, one or a plurality of conveyor modules each comprised in a container may be provided at several outdoor locations for handling parcel or luggage items at several operational sites without the need for providing any buildings. This may in turn also reduce the need for transporting the luggage or parcel items in the airport, possibly even completely eliminating the need for transporting the luggage or parcel items to a central sorting facility at the airport, if, e.g., the luggage or parcel items are transfer items.

In embodiments, the method further comprises the steps of:
- providing connecting conveyor means for conveying items from inside a building to at least one of the conveyor modules arranged at the outdoor location; and
- conveying luggage or parcel items from inside the building to at least one of the conveying modules; or
- conveying luggage or parcel items from at least one of the conveying modules to inside the building.

Thanks to the provision of the connecting conveyor means, items may be transported from the conveyor module in the shipping container at the outdoor location to the indoor location without the need for transported the luggage or parcel items on carts or trucks. This may speed up the process of transferring the luggage or parcel items between the indoor location, possibly housing, or being in contact with buildings housing, baggage drop/check in counters and/or luggage reclaim belts.

In embodiments, the method further comprises the step of interconnecting the connecting conveyor and a conveyor system arranged inside the building.

In this case, integration of the conveyor module in the shipping container and an existing conveyor system of an airport is particularly convenient, and automatic conveying of luggage or parcel items between the existing system and that in the one or more shipping containers may be enabled. At an airport with focus on minimisation of luggage and/or parcel handling time, such seamless integration with an existing conveyor system is particularly useful. The conveyor system inside the building may be an item conveyor and sorting system. It may also be departure luggage from baggage drop/check in or arrival luggage sorted in conveyor modules.

In embodiments, at least one of the conveying modules comprises an item diverting apparatus and a plurality of conveyor module shelves arranged in rows and/or columns, and wherein the method further comprises the step of:
- the item diverting apparatus selectively diverting an item onto a selected one of the conveyor module shelves arranged in rows and/or columns.

In this case, the at least one of the conveyor modules may be particularly suitable for sorting luggage or parcel items. Accordingly, the items may be sorted at the operation site of the conveyor module in the shipping container. As the operation site may be chosen relatively freely, this may enable sorting of items in the vicinity of aircraft parking sites/aircraft bays for more efficient item handling.

In embodiments, a first one of the conveying modules comprises a plurality of conveyor module shelves arranged in rows and/or columns, and a second one of the conveying modules comprises an item diverting apparatus, wherein the method further comprises the steps of:
- arranging the shipping container comprising the first one of the conveying modules and the shipping container comprising the second one of the conveyor modules adjacent to each other; and
- the item diverting apparatus of the second one of the conveyor modules selectively diverting an item onto a selected one of the plurality of shelves of the first one of the conveyor modules.

This allows for optimised interplay between the first and second conveyor modules and for specialisation of the first and second conveyor modules allowing the item diverting apparatus to sort items on the plurality of shelves of the first one of the conveyor modules. Such optimised interplay and specialisation of the first and second conveyor modules may allow for better space utilisation in each of the shipping containers comprising the first and second conveyor modules. This may in turn reduce the footprint of the conveyor system formed by the first and second conveyor modules, preferably without reducing the capacity of same.

In embodiments, at least one of the conveying modules comprises a continuously drivable conveyor for conveying items and a plurality of pushers for discharging the items from the conveyor, the plurality of pushers being arranged at unloading positions along the conveying direction of the continuously drivable conveyor, wherein the method further comprises the steps of:
- assigning a selected pusher and unloading position to an item prior to the item being conveyed by the continuously drivable conveyor;
- the item being conveyed by the continuously drivable conveyor; and
- the item being discharged from the continuously drivable conveyor by the selected pusher at the selected unloading position.

This allows for automated handling and sorting of luggage or parcel items with items being automatically unloaded under the action of the pushers. The automatic sorting is achieved by a conveyor module being comprised in a shipping container, the conveyor module being shipped in a pre-assembled operational state in the shipping container.

In embodiments, a plurality of third conveyor modules are arranged to accept items from the plurality of unloading positions, wherein the method further comprises the steps of:
- assigning a selected third conveyor module to an item prior to the item being conveyed by the continuously drivable conveyor; and
- the item being selectively discharged from the continuously drivable conveyor and accepted by the selected third conveyor module.

The plurality of third conveyor modules each being arranged in an individual shipping container accordingly accept the selectively discharged, and thereby sorted, items for temporary storage and/or ordered arrangement thereof. This allows for an optimised interplay between conveyor modules of individual shipping containers and the ability of provided a conveyor system with versatile functionality comprising conveyor modules arranged in individual shipping containers.

In one embodiment:
- at least one of the third conveyor modules comprises a plurality of conveyor module shelves for storing a plurality of items on each conveyor module shelf, each conveyor module shelf extending in a longitudinal direction from an inlet end of the conveyor module unit to an outlet end thereof, and wherein the shelves of the conveyor module are essentially parallel; and
- a the at least one third conveyor module comprises an item diverting apparatus for receiving items unloaded from the continuously drivable conveyor of the second conveyor module and for diverting the items into the plurality of conveyor module shelves of the third conveyor module.

The item diverting apparatus and plurality of shelves of the at least one third conveyor module allows for an additional step of item sortation within the third conveyor module.

In embodiments, the method further comprises the steps of:
- a conveyor module receiving baggage source messages;
- loading items assigned to a plurality of destinations onto at least one shelf of the conveyor module;
- scanning each item to determine at least the destination of each item in accordance with the received baggage source messages;
- based at least on the destination of each item, assigning a selected other conveyor module to each item; and
- transferring each item to the selected other conveyor module.

This allows for sorting of items based on the scanning and the received baggage source messages, the sorting occurring from one conveyor module to another, i.e. inter-module sorting. The baggage source messages may be messages from an airport carrier's departure control system to the airport's baggage handling system. The baggage source messages may also be transferred from another item handling and sorting conveyor system to the conveyor module.

In embodiments, at least one conveyor module comprises a plurality of conveyor module shelves forming a first structure of columns and/or rows, and at least one cart comprises shelves forming a second structure of columns and/or rows, whereby each respective conveyor module shelf and cart shelf of one of the first and second structures lies flush with the other one of the first and second structures when the at least one cart is in a predetermined parking position relative to the conveyor module, the method further comprising the step of:
- simultaneously unloading items from the shelves forming the second structure of the cart and loading the items onto the shelves forming the first structure of the conveyor module; or
- simultaneously unloading items from the shelves forming the first structure of the conveyor module and loading the items onto the shelves forming the second structure of the cart.

In this case, seamless integration of the at least one conveyor module and the cart is enabled for efficient item or baggage transfer between the two. Moreover, this allows for efficient loading and unloading of carts at the operation site of the conveyor module, which may be at an outdoor location relatively close to an aircraft parking site/aircraft bay.

In embodiments, each conveyor module is stationary relative to ground and stationary relative to the other conveyor modules during operation of the conveyor modules. This allows for stable operation of the conveyor modules and for connecting the conveyor modules via stationary connecting conveyors.

In embodiments, the method further comprises the step of:
- transporting the plurality of conveyor modules to the operation site with each conveyor element required for interconnecting the plurality of conveyor modules being comprised in the plurality of shipping containers.

In this case, convenient transportation and installation of the plurality of conveyor modules may be enabled. Particularly, the conveyor system being formed by the plurality of interconnected conveyor modules may be provided simply by arranging the plurality of shipping containers in a desired pattern at the operation site and interconnecting the conveyor modules by use of components already present in the shipping containers.

### Description of the drawings

Embodiments of the invention will now be further described with reference to the accompanying drawings, in which:
Fig. 1 illustrates an embodiment of a conveyor module;
Figs. 2-3 illustrate details of an embodiment of a conveyor module;
Figs. 4-11 each illustrate embodiments of a plurality of conveyor modules;
Fig. 12 illustrates an embodiment of cart;
Fig. 13 illustrates an embodiment of a connector unit; and
Figs. 14-15 illustrate embodiments of shipping containers.

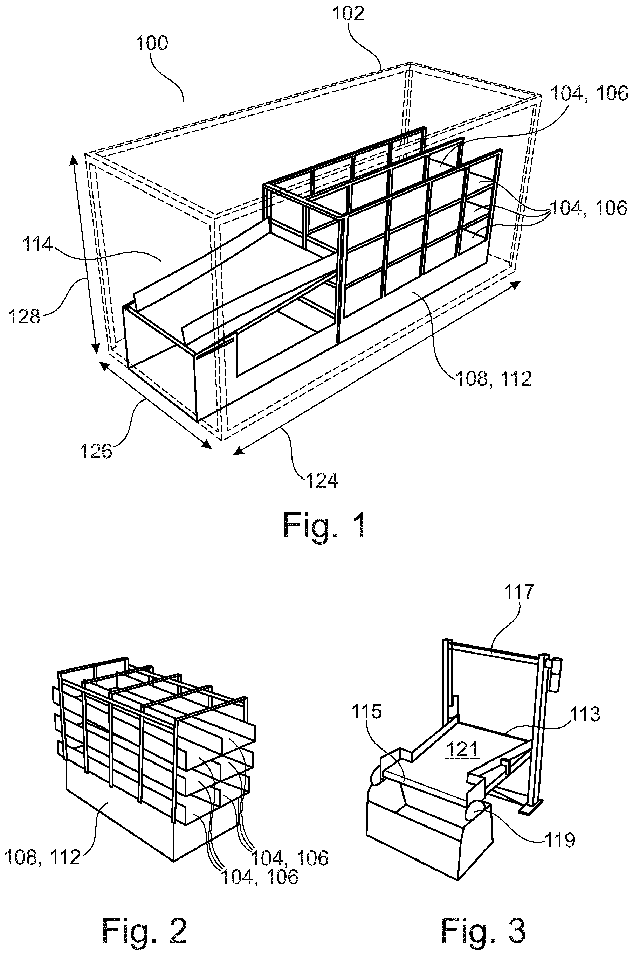

The embodiment of the conveyor module 100 of Fig. 1 is comprised in a shipping container 102. The conveyor module 100 comprises a plurality of conveyor module shelves 104 comprising conveyor means 106 for conveying luggage or parcel items 101 and an electrical drive system 108 for driving the conveyor means 106. The electrical drive system 108 in the embodiment of Fig. 1 is hidden under the cover 112 below the conveyor module shelves 104. The conveyor module 100 and electrical drive system 108 is in a pre-assembled operational state in Fig. 1. Accordingly, to put the conveyor module 100 into operation, all there is needed is to open the container 102 and connect the electrical drive system 108 to a power supply. This allows for convenient installation of the conveyor module 100 at an operational site.

The conveyor module 100 of Fig. 1 comprises a plurality of conveyor module shelves 104 forming a first structure of columns and rows for mating with cart shelves 204 of a cart 200 forming a second structure of columns and rows, whereby each respective conveyor module shelf 104 and cart shelf 204 of one of the first and second structures lies flush with the other one of the first and second structures when the at least one cart 200 is in a predetermined parking position relative to the conveyor module 100. The conveyor module 100 of Fig. 1 further comprises an item receiving apparatus 114 capable of receiving items 101 from each of the conveyor module shelves 104 arranged in rows and columns, the item receiving apparatus 114 being illustrated in more detail in Fig. 3 and the conveyor module shelves 104 being illustrated further in Fig. 2.

The shipping container 102 in Fig. 1 is a 20 foot intermodal container having a length 124 of 6.09 metre, a width 126 of 2.44 metre and a height 128 of 2.89 metre.

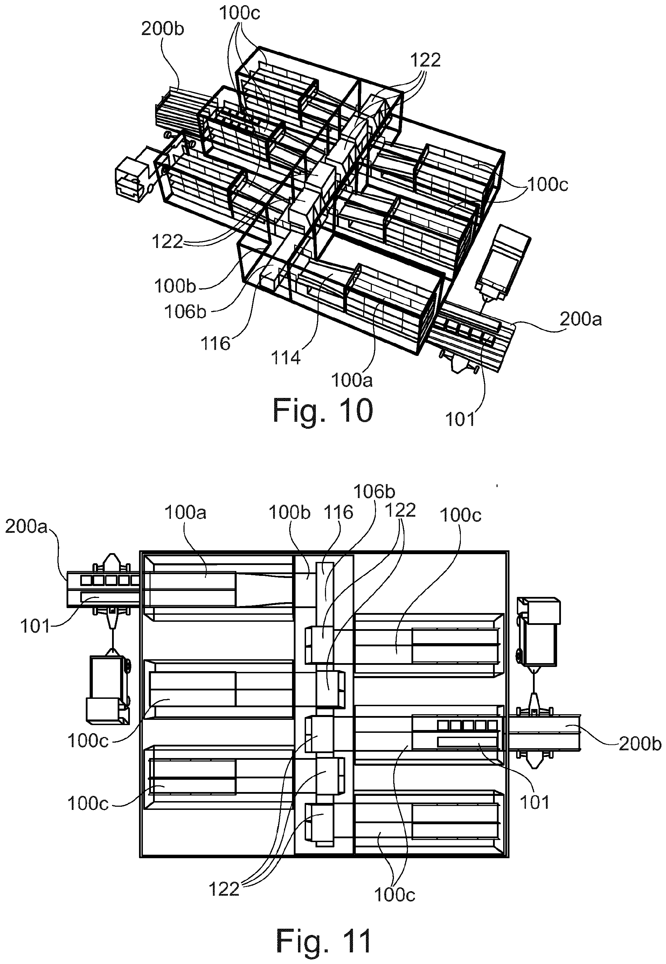

The item receiving apparatus 114 of the embodiments illustrated in Fig. 1 and Figs. 4-11 has a receiving end 113 for receiving items 101 and a delivery end 115 for passing the items 101 on and is illustrated in more detail in Fig. 3. The receiving end 113 is vertically movable in the vertical frame 117 to adjust its height to match that of either of the adjacent conveyor module shelves 104 for smooth receipt of items 101. The delivery end 113 is horizontally movable in the horizontal frame 119 to allow the receiving end 113 to move vertically without changing the length of the receiving conveyor belt 121.

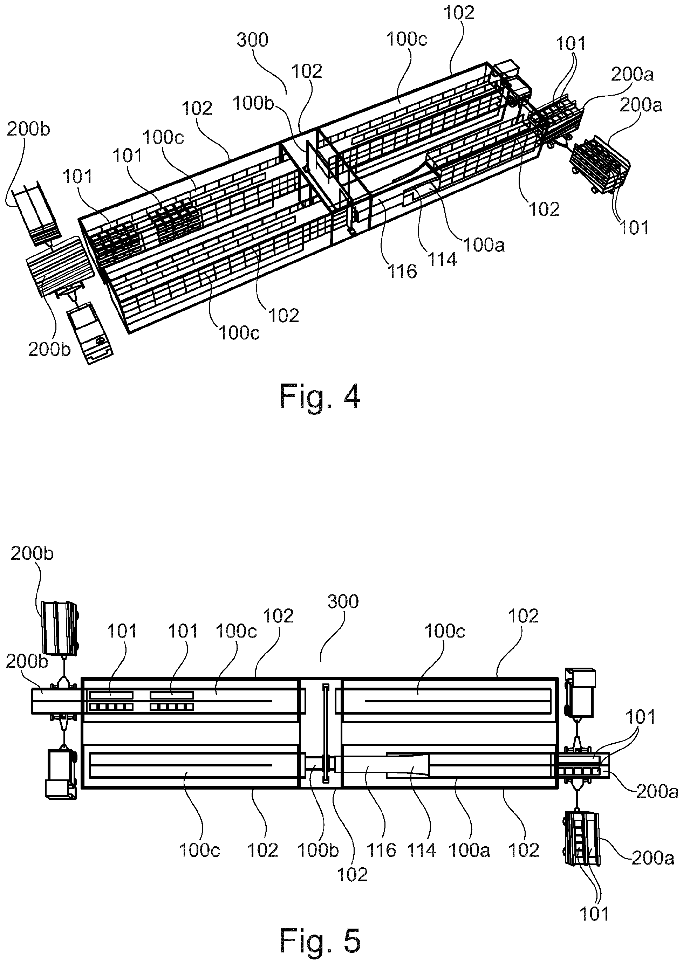

Figs. 4 and 5 illustrate an embodiment of a conveyor system 300 for luggage or parcel items 101 comprising a plurality of conveyor modules 100 each comprised in a shipping container 102. The conveyor system 300 of Figs. 4 and 5 is configured to receive items 101 from carts 200a, sort the items 101 for individual flight departures and deliver the sorted items 101 to other carts 200b. The conveyor system 300 comprises three distinct types of conveyor modules 100. The first type 100a is one for receiving luggage or parcel items 101 from a cart 200a. The items 101 are transferred from cart shelves 204 arranged in rows and columns onto corresponding conveyor module shelves 104 similarly arranged in rows and columns. The first type conveyor module 100a further comprises a scanner (not shown) at a scanning point 116. The scanner scans the luggage tag or item identity tag.

The scanned information along with the item 101 are thereafter transferred to a second type conveyor module 100b. In the second type conveyor module 100b, the scanned information from the item 101 is compared with the information from the baggage source message received from an airport or carrier control system. The destination of the item 101 is derived from the comparison and based on this destination; the item 101 is assigned to a selected third type 100c conveyor module 102. The second type 100b conveyor module 102 further comprises an item diverting apparatus 118 for transferring the item 101 to the selected third type conveyor module 100c. The item diverting apparatus 118 in the embodiment of Figs. 4 and 5 is capable of diverting each item 101 onto a specific conveyor module shelf 104 of the selected third type conveyor module 100c.

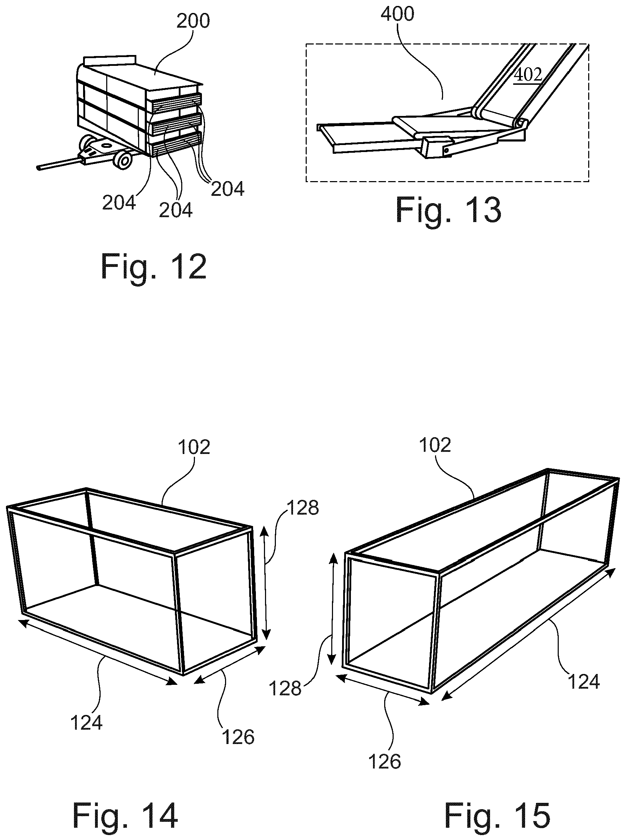

The third type 100c conveyor module comprises a plurality of conveyor module shelves 104 for storing a plurality of items 101, each shelf 104 comprising conveyor means 106 driven by an electrical drive system 108. One or more shelves 104 of each third type 100c conveyor module may be assigned to a specific flight and accordingly accept items 101 for that specific flight. Preferably, all of the shelves 104, or at least a section thereof, of each third type conveyor module 100c are dedicated to a specific flight. In this case, a cart 200b parked in the predetermined parking position at the third type 100c conveyor module is able to receive items 101 on all shelves simultaneously, all of the items 101 being assigned to the same aircraft. The cart 200b may then be towed to the aircraft for loading of all of the items 101 on the cart 200b in to the aircraft, e.g., by use of a connector unit 400 as illustrated in Fig. 13.

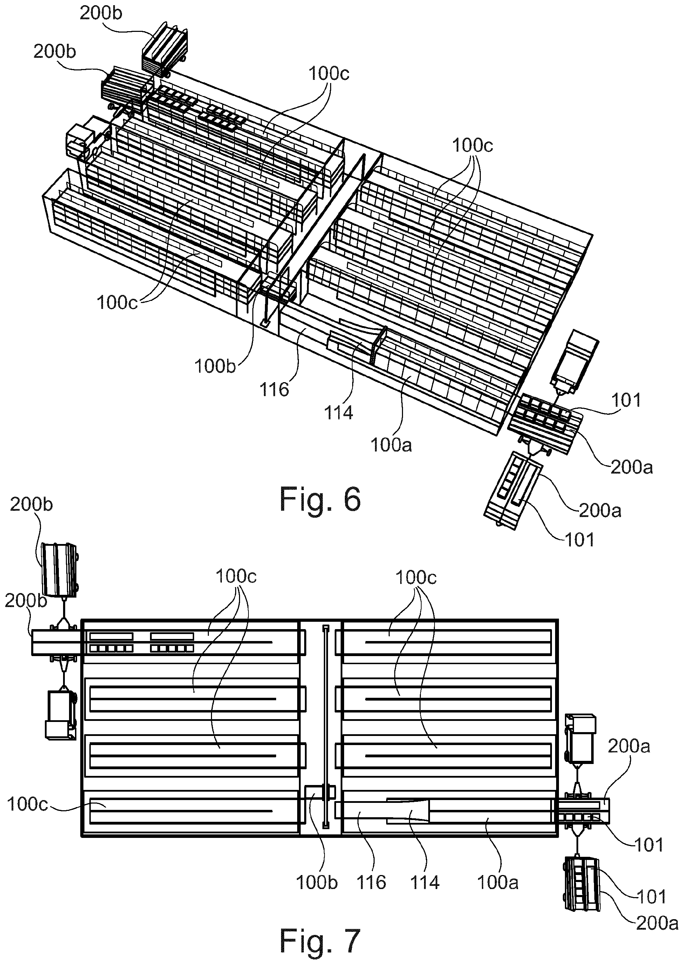

The embodiments illustrated in Figs. 6 and 7 are similar to that illustrated in Figs. 4 and 5, except only in respect of the number of third type 100c conveyor modules 100 and the length of the second type conveyor module 100b. In the embodiment of Figs. 4 and 5 the second type conveyor module 100b is comprised in a 20 foot intermodal container and in the embodiment of Figs. 6 and 7 the second type conveyor module 100b is comprised in a 40 foot intermodal container.

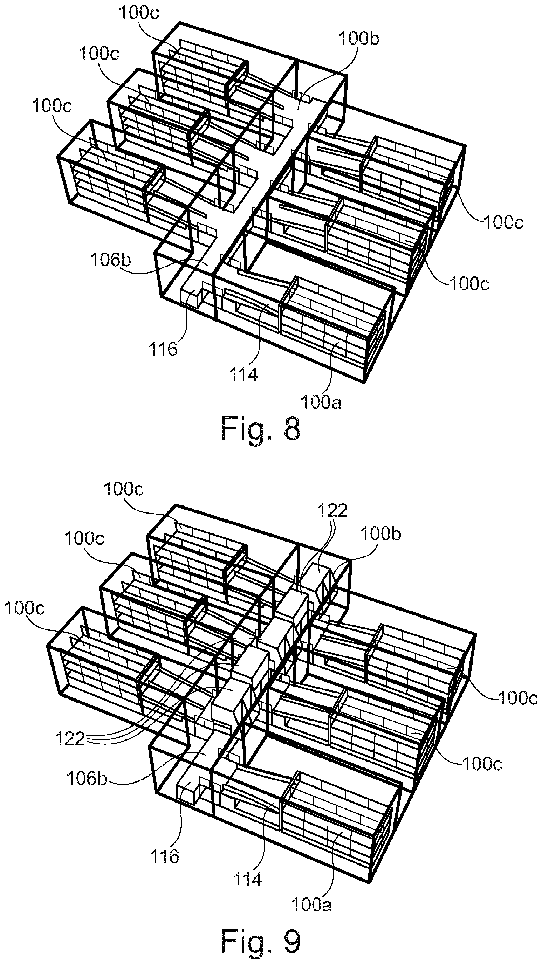

Figs. 8-11 illustrate embodiments of conveyor systems 300, the conveyor systems 300 being configured specifically to handle transit parcel or luggage items 101. In the system 300 of Figs. 8-11, items 101 are received from carts 200a at a first type conveyor module 100a. The items 101 are transferred to second type conveyor module 100b having a continuously drivable conveyor 106b from which items 101 are selectively discharged and accepted by the selected third type conveyor module 100c for sorting of the items 101 onto to specific conveyor module shelves 104c. In the embodiment of Fig. 8, the items are manually discharged from the continuously driveable conveyor 106b by personnel at one or more unloading positions. In the embodiments of Figs. 9-11, items 101 are automatically discharged from the continuously drivable conveyor 106b by a selected pusher 122 at a selected unloading position.

Each pusher 122 may be a pusher as described in International patent publication No. WO 2018/007397. Such a pusher 122 and its mode of operation will now be further described. The pusher 122 is arranged above the continuously drivable conveyor 106b for driving items 101 in a first direction. The continuously driveable conveyor 106b comprises a surface for supporting the items 101. The pusher 122 is provided for discharging the items 101 from the continuously driveable conveyor 106b. The pusher comprises an arresting element for arresting the items 101 on the continuously driveable conveyor 106b, while a movable surface of the conveyor passes below the arresting element. Further, the pusher 122 comprises a discharge element for pushing the item 101 off the continuously driveable conveyor 106b in a direction transverse to a direction of movement of the continuously driveable conveyor 106b. The arresting element is movable in an upright direction between an arresting position, and an elevated position in which items 101 conveyed by the continuously driveable conveyor 106b may pass freely under the arresting element.

A drive system of the pusher 122 generally comprises a discharge drive for moving the discharge element across the continuously driveable conveyor 106b in the transverse direction. The discharge drive is mounted within a frame structure at a fixed position above the continuously driveable conveyor 106b. It should be understood that the frame structure may be covered by a protecting cover, and/or that the frame structure may define or form part of a housing. The drive system further comprises an arresting element drive for moving the arresting element between the arresting position and the elevated position.

The frame structure comprises a transversely extending rail, from which the discharge element is suspended via a first upright rail. The discharge drive is arranged to drive the discharge element by movement thereof along the transversely extending rail. The first upright rail forms part of the discharge element, which also comprises pusher plate for pushing the item 101 off of the continuously driveable conveyor 106b in the transverse direction. The discharge element is preferably movable in the transverse direction, while the arresting element is in the arresting position, so as to ensure that forward movement of the item 101 in the conveying direction of the continuously driveable conveyor 106b is avoided during discharge of the item 101 from the continuously driveable conveyor 106b.

Fig. 12 illustrates an embodiment of a cart 200 forming a second structure of cart shelf 204 columns and rows for use with any of the conveyor modules 100 as illustrated in the previous figures. The cart 200 may be a cart as described in International patent publication No. WO 2008/020084. Such a cart 200 includes a storage section mounted on a chassis, the chassis being supported by four wheels. The storage section includes eight cart shelves 204 arranged in two columns and four rows. The chassis 104 includes a rear coupling element 110, and a front coupling element, the rear and front coupling elements constituting mating pairs of coupling elements. The shelves 204 are inclined with respect to the chassis and extend from a loading end of the storage section to an unloading end, the lower end of the shelves 204 being at the unloading end of the cart. A hoisting apparatus is provided at the loading end of the cart for opening and closing a loading-end closure element. The wheels may be arranged on supports in pairs, i.e. so that a front pair of wheels is supported by one supporting element, and a rear pair of wheels is supported by another supporting element. For improved manoeuvrability of the cart, each pair of supporting elements is preferably rotatably mounted with respect to the chassis to allow each support and hence each pair of wheels to rotate around a vertical axis with respect to the chassis.

Fig. 13 illustrates an embodiment of a connector unit 400 for transfer of items between a cart 200 and an airplane. The connector unit 400 may be a connector unit as described in International patent publication No. WO 2018/091097. In such an embodiment, near the end point of the item conveyor 402, the connector unit 400 is anchored to the two rigid elements of the item conveyor 402 by an anchoring element. At the end point of the item conveyor 402, items are transferred between the item conveyor 402 and the connector unit 400. The conveyor assembly comprising the connector unit 400 and the item conveyor 402 is capable of both loading items from the connector unit 400 to the item conveyor 402 and unloading items from the item conveyor 402 to the connector unit 400. In the embodiment of Fig. 13, the connector unit 400 comprises mutually displaceable first and second connector conveyor elements. Each connector conveyor element comprises a conveyor belt capable of bidirectional conveying. The first and second connector conveyor elements are arranged in a unloading position for loading items from the connector unit 400 to the item conveyor 402 in Fig. 13. With the illustrated arrangement, an item travelling from right to left, i.e. in a direction for unloading items from the item conveyor 402, will engage the surface of the conveyor belt to which the item is transferred, each time the item is transferred from one conveyor element to another. This increases the reliability of the conveyor assembly.

The connector unit 400 further comprises a rotation element allowing rotation of the connector unit 400 around an axis of rotation, a tilting element allowing tilting of the connector unit 400 relative to the item conveyor 402, and, optionally, an alignment element allowing tilting of the rotation element and axis of rotation relative to the connector unit 400.

Fig. 14 illustrates the outer frame of a 20 foot intermodal container 102 for use in embodied conveyor modules 100 having a length 124 of 6.09 metre, a width 126 of 2.44 metre and a height 128 of 2.89 metre. Fig. 15 illustrates the outer frame of a 40 foot intermodal container 102 for use in embodied conveyor modules 100 having a length 124 of 12.18 metre, a width 126 of 2.44 metre and a height 128 of 2.89 metre.

## Claims

1. A method of building and operating a conveyor system, comprising the steps of:
- providing a plurality of conveyor modules, each conveyor module at least comprising:
∘ at least one shelf comprising conveyor means for conveying luggage or parcel items; and
∘ at least one electrical drive system arranged to drive the conveyor means, wherein each conveyor module is comprised in a shipping container;
- arranging the plurality of shipping containers in the vicinity of each other at an operation site;
- interconnecting the plurality of conveyor modules comprised in the respective shipping containers while at least part of the conveyor modules remain inside the containers; and
- operating the conveyor system while the conveyor modules remain inside the containers.

2. A method according to claim 1, wherein each shipping container is an intermodal container.

3. A method according to claim 1 or 2, wherein the operation site is an outdoor location.

4. A method according to claim 3, wherein the method further comprises the steps of:
- providing connecting conveyor means for conveying items from inside a building to at least one of the conveyor modules arranged at the outdoor location; and
- conveying luggage or parcel items from inside the building to at least one of the conveying modules; or
- conveying luggage or parcel items from at least one of the conveying modules to inside the building.

5. A method according to claim 4, wherein the method further comprises the step of interconnecting the connecting conveyor and a conveyor system arranged inside the building.

6. A method according to any of the preceding claims, wherein at least one of the conveying modules comprises an item diverting apparatus and a plurality of conveyor module shelves arranged in rows and/or columns, and wherein the method further comprises the step of:
- the item diverting apparatus selectively diverting an item onto a selected one of the conveyor module shelves arranged in rows and/or columns.

7. A method according to any of the preceding claims, wherein a first one of the conveying modules comprises a plurality of conveyor module shelves arranged in rows and/or columns, and a second one of the conveying modules comprises an item diverting apparatus, and wherein the method further comprises the steps of:
- arranging the shipping container comprising the first one of the conveying modules and the shipping container comprising the second one of the conveyor modules adjacent to each other; and
- the item diverting apparatus of the second one of the conveyor modules selectively diverting an item onto a selected one of the plurality of shelves of the first one of the conveyor modules.

8. A method according to any of the preceding claims, wherein at least one of the conveying modules comprises a continuously drivable conveyor for conveying items and a plurality of pushers for discharging the items from the conveyor, the plurality of pushers being arranged at unloading positions along the conveying direction of the continuously drivable conveyor, and wherein the method further comprises the steps of:
- assigning a selected pusher and unloading position to an item prior to the item being conveyed by the continuously drivable conveyor;
- the item being conveyed by the continuously drivable conveyor; and
- the item being discharged from the continuously drivable conveyor by the selected pusher at the selected unloading position.

9. A method according to claim 8, wherein a plurality of third conveyor modules are arranged to accept items from the plurality of unloading positions, wherein the method further comprises the steps of:
- assigning a selected third conveyor module to an item prior to the item being conveyed by the continuously drivable conveyor; and
- the item being selectively discharged from the continuously drivable conveyor and accepted by the selected third conveyor module.

10. A method according to any of the preceding claims, wherein the method further comprises the steps of:
- a conveyor module receiving baggage source messages;
- loading items assigned to a plurality of destinations onto at least one shelf of the conveyor module;
- scanning each item to determine at least the destination of each item in accordance with the received baggage source messages;
- based at least on the destination of each item, assigning a selected other conveyor module to each item; and
- transferring each item to the selected other conveyor module.

11. A method according to any of the preceding claims, wherein at least one conveyor module comprises a plurality of conveyor module shelves forming a first structure of columns and/or rows, and at least one cart comprises shelves forming a second structure of columns and/or rows, whereby each respective conveyor module shelf and cart shelf of one of the first and second structures lies flush with the other one of the first and second structures when the at least one cart is in a predetermined parking position relative to the conveyor module, the method further comprising the step of:
- simultaneously unloading items from the shelves forming the second structure of the cart and loading the items onto the shelves forming the first structure of the conveyor module; or
- simultaneously unloading items from the shelves forming the first structure of the conveyor module and loading the items onto the shelves forming the second structure of the cart.

12. A method according to any of the preceding claims, wherein each conveyor module is stationary relative to ground and stationary relative to the other conveyor modules during operation of the conveyor modules.

13. A method according to any of the preceding claims, wherein the method further comprises the step of:
- transporting the plurality of conveyor modules to the operation site with each conveyor element required for interconnecting the plurality of conveyor modules being comprised in the plurality of shipping containers.

14. A modular conveyor system for luggage or parcel items, comprising:
- a plurality of shipping containers;
- at least one conveyor module of the conveyor system within each container, each conveyor module comprising:
∘ at least one conveyor module shelf comprising conveyor means for conveying the luggage or parcel items;
∘ at least one electrical drive system for driving the conveyor means,
wherein the at least one conveyor module shelf and the at least one electrical drive system are comprised in the respective containers in a pre-assembled operational state.

15. A shipping container for use in a modular conveyor system for luggage or parcel items according to claim 14, the shipping container comprising:
- at least one conveyor module, the conveyor module comprising:
∘ at least one conveyor module shelf comprising conveyor means for conveying the luggage or parcel items;
∘ at least one electrical drive system for driving the conveyor means,
wherein the at least one conveyor module shelf and the at least one electrical drive system are comprised in the container in a pre-assembled operational state.
